Europäisches Patentamt

European Patent Office

Office européen des brevets

(11) Publication number: **0 307 208**
**A1**

# EUROPEAN PATENT APPLICATION

(21) Application number: **88308321.4**

(22) Date of filing: **08.09.88**

(51) Int. Cl.⁴: **F 16 D 55/14**
**F 16 D 65/46**

(30) Priority: **11.09.87 GB 8721403**

(43) Date of publication of application:
**15.03.89 Bulletin 89/11**

(84) Designated Contracting States: **DE FR GB IT**

(71) Applicant: **LUCAS INDUSTRIES public limited company**
**Great King Street**
**Birmingham, B19 2XF West Midlands (GB)**

(72) Inventor: **Price, Anthony George**
**14 Meadow Lane Croesyceiliog**
**Cwmbran Gwent NP44 2EY Wales (GB)**

**Campbell, Roy**
**The Corner House 1 Marlbrook Lane Licky Rock**
**Bromsgrove Worcestershire (GB)**

(74) Representative: **Spall, Christopher John et al**
**BARKER, BRETTELL & DUNCAN 138 Hagley Road**
**Edgbaston Birmingham B16 9PW (GB)**

(54) **Improvements in disc brakes.**

(57) To compensate for wear of the friction linings (12) of an internally expanding disc brake an adjuster unit of variable depth is provided in the housing (5) of the brake. This adjuster unit comprises two adjuster plates (1,2) provided with camming means (19,20) and a screw adjuster (3) arranged such that movement of one of the plates in its own plane relative to the other plate causes relative axial movement between the plates. The adjustment of the plates is made by a radial movement of the screw adjuster. The whole of one plate may move bodily radially relative to the other adjuster plate. The adjuster unit may be located in a variety of positions within the housing and can effectively form an axially variable end-wall, pressure plate, or stator disc. One of the plates of the adjuster unit can be integral with a pressure plate.

FIG.1.

## Description

**IMPROVEMENTS IN DISC BRAKES**

This invention relates to disc brakes of the kind in which rotatable friction discs provided with friction linings are adapted to be brought into engagement with spaced opposed braking surfaces in a housing by pressure plates located between the friction discs and centred by stationary pilot lugs, application of the brake being initiated by angular movement of the pressure plates effected by operation of a brake-applying mechanism co-operating with radially projecting lugs on the plates, and through which a brake-applying force is applied to the plates, balls or rollers being located in co-operating oppositely inclined recesses in the adjacent faces of the pressure plates such that on operation of the brake-applying mechanism to move the pressure plates angularly in opposite directions the engagement of the balls or rollers and the recesses causes the pressure plates to move apart into engagement with the friction discs which are urged into engagement with the braking surfaces. Such disc brakes are hereinafter called brakes of the kind set forth.

This invention is especially applicable to self-energising disc brakes of the kind set forth in which, upon engagement of the pressure plates with the friction discs, the pressure plates are carried round with the friction discs until one is arrested by the engagement of a lug on the plate with a drag-taking stop abutment in the housing and the continued angular movement of the other pressure plate provides a servo action.

Self-energising brakes of the kind set forth are commonly used in tractors and like vehicles.

The efficiency of an actuating linkage of a brake is dependant upon the degree of wear of the friction linings of the friction discs. As the linings wear the pressure plates have to be moved angularly through progressively greater angular distances in order to actuate the brake. Consequently the geometry of the actuating linkage at the point of brake application changes with the wear condition of the friction linings. Thus the travel of the brake foot-pedal varies with wear of the linings. Such changes result in a decrease in the efficiency of the brake. The driver also experiences non-uniform operational characteristics over the wear life of the linings.

In order to overcome such problems it is known to provided compensating mechanisms in the brake applying linkage which keep the pressure plates partially displaced angularly when the linings are worn.

However, another problem which affects many self-energising brakes is that when the linings are worn the pressure plates have to be moved angularly relative to each other to a larger extent than when the linings are new. Therefore the lug on the pressure plate which arrests the movement of the plate that is to be the "arrested", or non-servo, plate becomes progressively spaced angularly further from the drag-taking stop abutment as the linings wear. Therefore the plate acquires more energy before striking the drag-taking abutment. This can produce an alarming audible "clunk", and moreover can cause stress failure of the arresting lug. The practice of arranging for the pressure plates to be moved angularly with respect to each other before brake actuation only serves to increase the stresses applied to the arresting lug during braking.

An alternative approach to these problems is to vary the spacing between the braking surfaces of the housing as the friction linings wear. GB Patent No. 1 499 995 discloses a brake in which an adjuster unit is accommodated within the housing between one end-wall of the housing and an adjacent one of the rotatable discs. The adjuster unit comprises a pair of adjuster plates, balls or rollers located in inclined recesses in adjacent faces of the adjuster plates, and two tangential screw means to adjust the relative angular positions, and hence the axial separation, of the adjuster plates. In this arrangement an additional friction disc is interposed between the adjuster unit and the end-wall of the housing. Both adjuster plates therefore act as braking surfaces within the housing and both adjuster plates are separately angularly adjustable with respect to the housing. Individual tangential adjusting screws are adjusted for each adjuster plate.

In the construction of GB Patent No. 1 499 995 the effective overall length of the housing has to be increased substantially to accommodate the adjuster unit, and the brake is further complicated by the provision of the additional friction disc. Another problem is that actually adjusting the adjuster mechanism is tiresome and time consuming. The adjuster screws are at the 10 o'clock and 2 o'clock positions and the heads of the screws must be tangentially outwards of these positions. In order to adjust the screws access is effectively required to the whole of each side of the brake. Care must be taken to rotate each adjusting screw by an equivalent amount if the adjuster plates are to be kept symmetrical.

According to the invention in a disc brake of the kind set forth the braking surfaces are relatively movable axially, and adjusting means are provided for adjusting the axial spacing between the braking surfaces to compensate for wear of the friction linings, adjustment of the axial spacing between the braking surfaces being affected by the movement of a part of the adjusting means in a substantially radial direction.

Conveniently, movement of a single part of the adjusting means in a radial direction causes the adjustment to be made. Preferably this movement of the single part is effected by rotation of a single screw. This then provides an accessible and conveniently used adjusting mechanism.

Preferably the adjusting means is an adjuster unit comprising two adjuster plates and means for adjusting the relative positions of the adjuster plates. Most preferably camming means are provided between the adjuster plates so that movement of one of the plates in its own plane relative to the other adjuster plate causes the adjuster plates to separate axially. This may be achieved by providing one plate with a series of angularly spaced protrusions which are received in a complementary series of co-operating recesses provided in the adjacent face of the other plate. Movement of one plate relative to the other causes the protrusions to ride up ramp surfaces of the recesses. The relative movement between the plates may comprise relative angular movement, but more preferably is achieved by bodily movement of one of the adjuster plates substantially in a radial direction.

The means for adjusting the relative positions of the adjuster plates is preferably a radially extending screw adjuster which moves radially to cause the adjuster plates to separate axially. In constructions in which one adjuster plate moves bodily substantially in a radial direction the screw preferably causes a radial force to be applied to the one adjuster plate to move it radially with respect to the other adjuster plate, and camming means acting between the adjuster plates causes the plates to separate axially. The force exerted by the screw can act in a radially inwards or radially outwards direction.

Alternatively the adjuster plates may be arranged to move relatively angularly in response to the radial movement of the screw adjuster. The radial force is converted into a tangential force by any convenient means, such as through a pivoted lever.

The screw adjuster may conveniently be provided in the region of the drag taking abutment.

In another construction the camming means comprises complementary pairs of recesses in the adjuster plates, and a co-operating ball or roller located in the recesses of each pair.

Preferably the bodily radial movement of one of the adjuster plates is guided by guide means. The guide means may comprise shaping the protrusions and recesses such that the radial movement is controlled by the engagement between the protrusions and the recesses. Alternatively the periphery of the radially moveable plate can be provided with guide surfaces which cooperate with complementary guides provided in the housing. The guides may be provided on the pilot lugs of the housing.

The adjuster unit may be located in any one of several different positions in the brake, for example between one of the pressure plates and the adjustment friction disc, or between an end wall of the housing and the adjacent friction disc. It may also be located between two friction discs, effectively replacing what would normally be a stationary plate.

The advantages of providing radial adjusting means to initiate adjustment of the spacing between the radial braking faces are primarily that it is very simple to adjust and is easily accessible, and also that the brakes housing depth is not significantly extended. The adjuster unit is very compact axially. This makes it easier to incorporate brake actuating pistons in the brake. Moreover, the adjuster unit allows increased tolerances for the manufacture of the brake stack and housing depth, since any slight variation can be readily compensated. A further advantage is that because there is only one adjustment screw entry point into the housing, and even that has a radial entry, problems with the sealing of the housing are minimised.

Some embodiments of the invention will now be described, by way of example only, with reference to the accompanying drawings of which:-

Figure 1 is a partial section through a disc brake of the spreading type; ;

Figure 2 is a schematic view similar to Figure 1 showing a modification;

Figure 3 is a plan view of the brake of Figure 2;

Figure 4 is a cross-section on line 4-4 of Figure 3;

Figure 5 is a schematic plan view of another disc brake of the spreading type;

Figure 6 is a cross-section on line 6-6 of Figure 5;

Figure 7 shows the adjuster unit of Figure 4 situated between two friction discs;

Figure 8 shows the adjuster unit of Figure 4 adjacent a pressure plate of a uni-servo brake;

Figure 9 is equivalent to Figure 8, but for a duo-servo brake;

Figure 10 is a plan view of the embodiment of Figure 9 as seen on the line 10-10;

Figure 11 is a plan view of a rotating wedge adjuster unit;

Figure 12 is a schematic section of a modification of the adjuster unit shown in Figure 11;

Figure 13 is a plan view of the adjuster unit of Figure 12 as see on the line 13-13;

Figures 14 to 17 show schematic sections of suitable ramp mechanisms for incorporation into adjuster units; and

Figure 18 shows yet another adjuster unit.

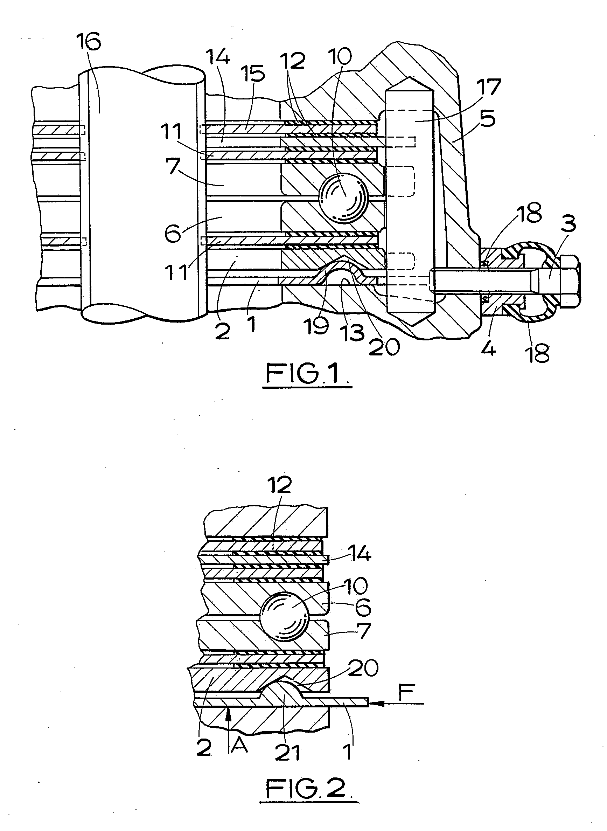

The brake of Figure 1 is a self-energising, or servo, disc brake and comprises a housing 5 in which a pair of pressure plates 6 and 7 provided with pairs of angularly spaced recesses 8 and 9 is centred by stationary pilot lugs (not shown in Figure 1). A ball 10 is located in each of the recesses of each pair. The pressure plates are arranged to be axially separable in response to relative angular movement so that they may be brought to bear against respective rotatable friction members 11, provided with friction linings 12, located axially outwards of the pressure plates, and urge them towards respective end walls of the housing.

An adjuster unit is interposed between one friction disc 11 and one end-wall 13 of the housing. A non-rotatable 'stationary' plate 14 is provided axially outwards of the other friction member 11 and outside that is provided a further friction member 15. The friction members 11 and 15 are keyed to a shaft 16 to allow them to move axially within the housing. The 'stationary' plate is keyed to a drag-taking abutment 17 provided rigid with the housing to prevent the plate from rotating, but allowing it to move axially within the housing. An actuating linkage to rotate the pressure plates relative to each other is provided, but is not shown.

The adjuster unit comprises adjuster plates 1 and 2 and an adjuster screw 3 arranged to bear on adjuster plate 1 in any convenient manner. The screw 3 is threadedly engaged with a sleeve 4 provided rigid with the housing 5 and moves relative to it.

The adjuster plates are provided with pairs of cooperating camming ramp surfaces arranged such that relative radial movement between the plates produces a relative separation of the plates. Adjuster plate 1 is provided with a series of angularly spaced domes 19 formed in the thick sheet metal from which it is made. Adjuster plate 2 is provided with a complementary series of angularly spaced ramped recesses 20. Both plates 1 and 2 are keyed to the drag-taking abutment 17 to secure them against angular movement. Plate 2 is centred on the shaft 16 by pilot lugs (not shown in Figure 1) and so cannot move radially. Plate 1 is adapted to move radially.

The operation of the conventional elements of the brake is well known. The operation of the adjuster will be apparent, but will be briefly described for completeness. As the linings 12 wear there is more axial freedom or 'play' between the components of the brake in the housing. This means that the pressure plates 6 and 7 have to be relatively rotated further to actuate the brake. At any desired frequency (or when the available brake pedal travel or handbrake lever travel is exhausted) the adjuster unit is adjusted to return the brake components and the actuating linkage to their original, or any other desired, relationships. To adjust the adjuster unit the screw 3 is rotated to urge adjuster plate 1 radially away from the sleeve 4. The adjuster plate 2 cannot move radially with plate 1 because it is centred by pilot lugs and therefore plate 1 moves radially relative to plate 2. The engagement of the domes 19 with the ramp surfaces of their respective recesses causes the relative radial movement of the plates to produce an axial separation of the plates 1 and 2. Thus the 'play' in the housing is taken up by the axial expansion of the adjuster unit. When the friction linings are replaced by new linings the screw 3 is retracted to its initial position, or if necessary even beyond that.

When the adjuster unit is adjacent end-wall 13 of the housing adjuster plate 2 effectively acts as an adjustable end-wall of the housing.

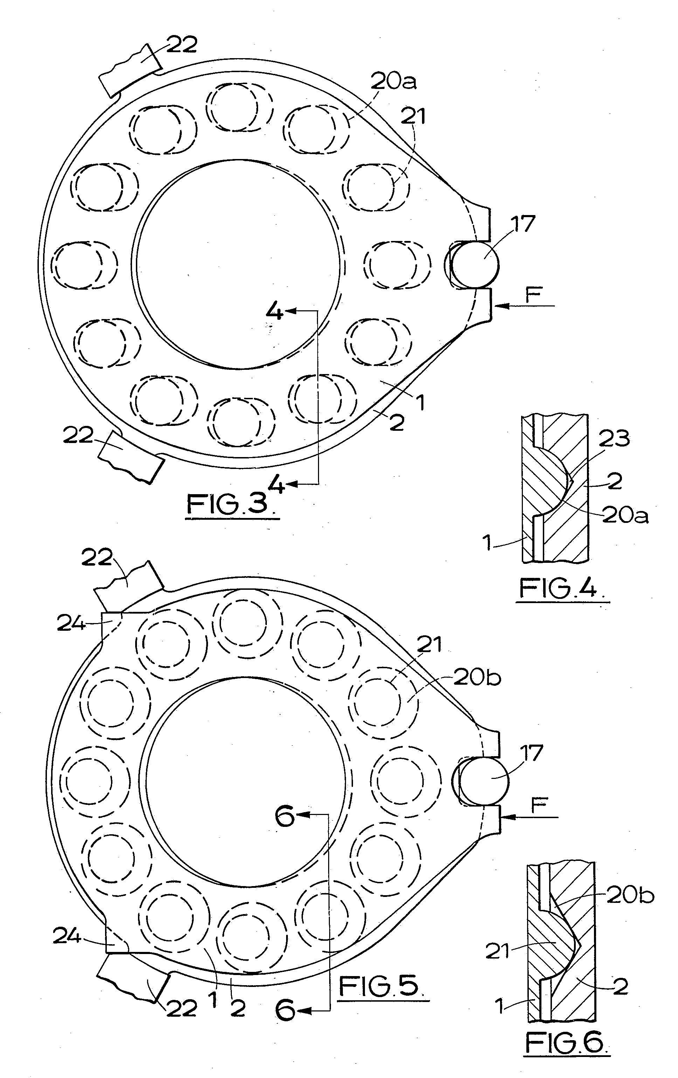

A modification is shown in Figures 2, 3 and 4. Instead of domes 19 pressed from sheet steel there are provided protrusions 21 which are solid and integral with the plate 1. The force F applied by the screw 3 is shown schematically. The force F could be applied to either lug, or to both lugs, of the sliding disc 1 which key the disc to the drag-taking abutment 17 and could be arranged, with consequential alterations to the structure of the adjuster unit, to pull the plate 1 radially outwards instead of pushing it radially inwards. The pilot lugs which centre adjuster plate 2 are shown at references 22 of Figure 3. The protrusions 21 are hemisperical and are received in radially elongated recesses 20a provided in the plate 2. The sliding adjuster plate 1 is guided in its radial movement by the shaping of the recesses 20a. All of the recesses 20a are radially aligned so as to guide the movement of plate 1. A small space 23 is provided at the bottom of the recesses 20a. This acts as a dust-trap to remove small particles from the working parts of the camming mechanism.

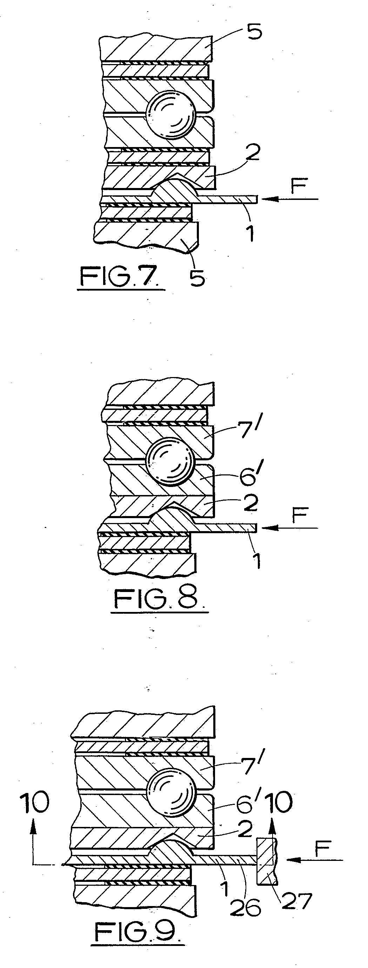

Another arrangement is shown in Figures 5 and 6. Here the protrusions 21 are again hemispherical, but the recesses in the plate 2, recesses 20b, are conical and the sliding adjuster plate 1 is guided by the engagement of guide lugs 24 provided on that plate with corresponding guide surfaces on the same pilot lugs 22 which centre the stationary adjuster plate 2. These pilot lugs 22 are the same pilot lugs which centre the pressure plates, but alternatively they could be provided separately.

The adjuster unit can be located in a variety of positions within the brake housing. Figure 7 shows it located between two rotatable friction members. Again both adjuster plates are keyed against rotation and only plate 1 can move radially. In this position the adjuster unit takes the place of a non-rotatable 'stationary' plate, such as plate 14, and provides in effect a 'stationary' plate of variable axial depth. It will be appreciated that this arrangement takes up very little additional axial space in the housing.

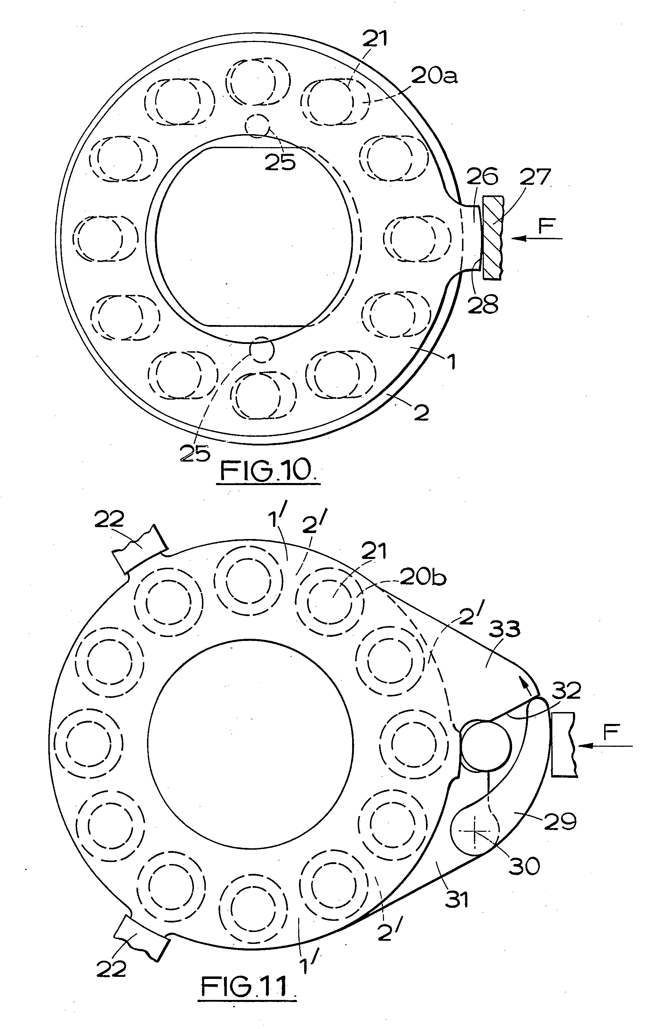

Figures 8 and 9 show the adjuster unit adjacent pressure plate 6' to provide the equivalent of a pressure plate of variable axial depth. Figure 8 shows its use in a uni-servo brake where pressure plate 6' and adjuster plates 1 and 2 are all keyed against rotation. Pressure plate 6' and adjuster plate 2 could be an integral plate.

Figures 9 and 10 show an equivalent arrangement for a duo-servo brake. Here both pressure plates 6' and 7' can rotate with respect to the housing. In this arrangement neither adjuster plate is prevented from rotating relative to the housing. Adjuster plate 2 is rigidly affixed to pressure plate 6' by pins 25 (shown in Figure 10). Alternatively the pressure plate 6' and the adjuster plate 2 could be formed as an integral plate. Adjuster plate 1 is guided to move radially with respect to adjuster plate 2 by means of its protrusions 21 moving in the elongated ramped recesses 20a of plate 2, as described for Figures 3 and 4. Adjuster plate 1 is provided with an outwardly extending radial lug 26. The radial force F applied by the screw 3 is transmitted to adjuster plate 1 by means of an abutment 27. The lug 26 and the abutment 27 both have a substantial circumferential length, and the lug 26 has a curved face 28 with which it engages the abutment 27.

When the pressure plate 6' is carried around during servo braking it moves angularly with respect to the housing and takes adjuster plate 2 with it. Adjuster plate 1 is forced to rotate with plate 2 because of the nature of the engagement of the camming surfaces. Therefore the lug 26 moves angularly and consequently it is necessary to ensure that the lug 26 cannot move completely angularly beyond the abutment 27 at any time in the operational life of the brake. If so desired adjuster plates 1 and 2 may be keyed to each other to allow only radial motion relative to each other. Alternatively they could be arranged to have a servo action upon braking.

Another adjuster unit is shown in Figure 11. A substantially radial force F is applied through an abutment 27, again of substantial circumferential length, to a pair adjuster plates 1′ and 2′. Plate 1′ is provided with a series of angularly spaced protrusions 21 and plate 2′ with a corresponding series of cooperating conical recesses 20b. Together the adjuster plates form a rotating wedge, as opposed to the linear wedge arrangements previously described. The abutment 27 presses against a curved arm 29 pivotally connected by pivot 30 at one end to a radially extending lug 31 provided on adjuster plate 2′. The other end of arm 29 engages an inclined surface 32 of a radially extending lug 33 provided on adjuster plate 1′. The lugs 31 and 33 also have respective abutments with drag-taking pin 17, although a separate pin could be provided if so desired. both adjuster plates 1′ and 2′ are centred by the respective engagements of their pilots with pilot lugs 22 provided in the housing and their engagement with pin 17.

The operation of this kind of adjuster will be apparent from the figures. As abutment 27 moves radially inwards it causes arm 29 to spread the adjuster plates angularly, which in turn causes an axial spreading of the plates as the protrusions 21 ride up the ramped surfaces of the recesses 20b. The engagement of arm 29 with pin 17 provides a convenient limit to the spreading of the adjuster plates.

When the adjuster of Figure 11 is to be used adjacent an end-wall of the housing the innermost adjuster plate, which is adjacent a rotatable friction member, (for example plate 2′) can be keyed against any angular rotation and the other plate which is adjacent the end-wall rotated to adjust the axial spacing.

When the adjuster is to used between two rotatable friction discs the discs will rotate together and so there will be no servo effect on the adjuster plates since they both experience the same torque from the friction discs.

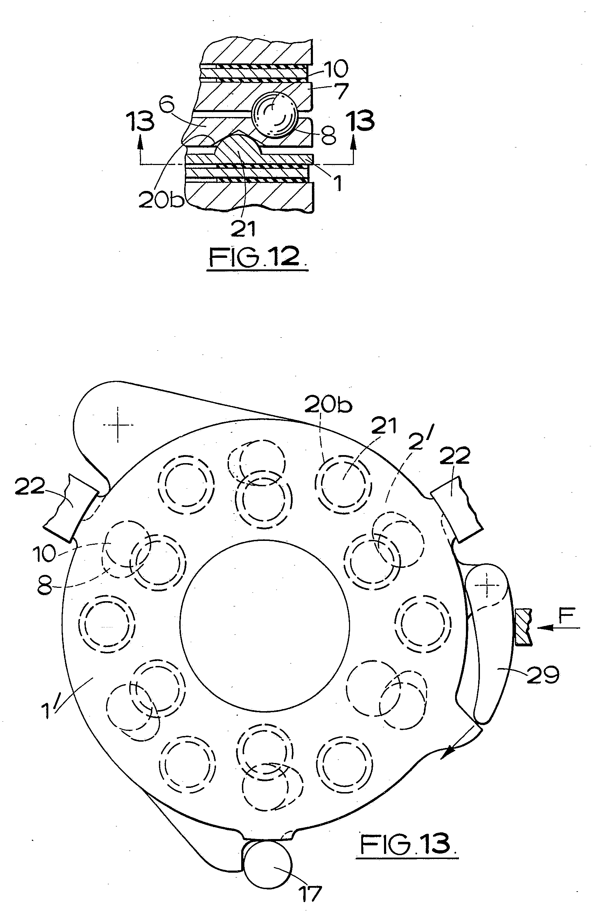

A rotating wedge adjuster unit similar to that of Figure 11, but for incorporation in a disc brake in place of a conventional pressure plate, is shown in Figures 12 and 13. Pressure plate 6 has two series of recesses, one in each of its faces. The first series is that of the shaped recesses 8 which are part of the normal ball-and-ramp expander mechanism of the pressure plates. The second series is provided in the other face of the plate 6 and is a series of conical recesses 20b which are part of the adjuster mechanism. Plate 6 could of course be made of two separate plates held together. Adjuster plate 1′ is not keyed against rotation since plate 6 moves angularly during brake actuation. When the brake is applied there is a servo action between plates 6 and 7 and also plates 1′ and 6.

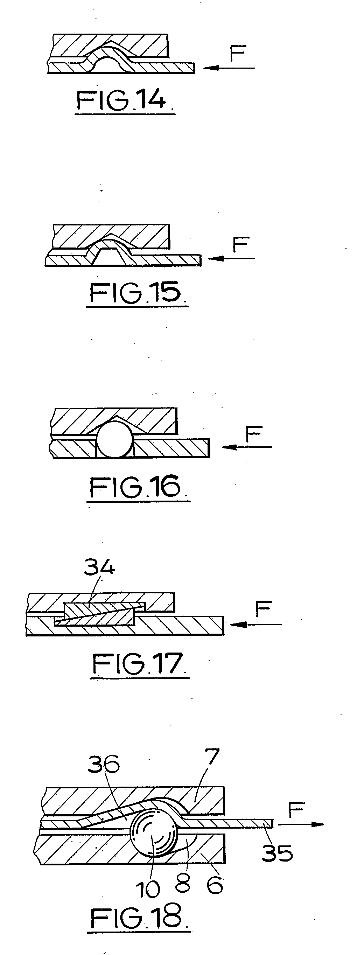

A variety of camming means can be used between the adjuster plates of both the linear wedge and the rotating wedge type. Figures 14 and 15 show two possible arrangements in which the recess is forged, cast, machined or cold formed, and the dome a steel pressing, casting, or is fine blanked, sintered, or cold formed. It is also of course possible to use balls or rollers in recesses, as Figure 16 shows. Particularly suitable for the linear wedge arrangements are ramped wedge inserts 34, shown in Figure 17.

Figure 18 shows an adjuster unit which is a single sheet plate 35 which is positioned between the pressure plates of a brake. The sheet steel forms recesses 36 of the adjuster plate 35 and also forms part of the camming surfaces of the adjusting mechanism. As the plate 35 is pulled radially outwards it causes pressure plate 7 to move further axially from pressure plate 6, but without affecting the relative angular positions of the pressure plates. The servo action between the pressure plates which normally occurs during braking is produced in this arrangement between plate 35 and pressure plate 6. Pressure plate 7 is carried with plate 35 during the servo action. To actuate the brake the pressure plates are moved angularly apart, pressure plate 7 carries plate 35 with it and the engagement of the balls 10 with the recesses 36 and 8 force the plates 35 and 6 apart.

The recesses 36 are suitably shaped to produce the brake actuating and servo camming effects, as well as the axial adjustment when plate 35 is pulled radially. Thus the plate 35 is capable of radial and angular movement with respect to the housing, but only radial movement with respect to pressure plate 7. Additional keying means may be provided to key plate 35 to plate 7 to allow only relative radial movement therebetween.

## Claims

1. A disc brake comprising rotatable friction discs (11) provided with friction linings (12) adapted to be brought into engagement with spaced opposed braking surfaces (2,5) in a housing (15) by pressure plates (6,7) located between the friction discs and centred by stationary pilot lugs, application of the brake being initiated by angular movement of the pressure plates (6,7) effected by operation of a brake-applying mechanism co-operating with radially projecting lugs on the plates, and through which a brake-applying force is applied to the plates, balls or rollers (10) being located in co-operating oppositely inclined recesses in the adjacent faces of the pressure plates such that on operation of the brake-applying mechanism to move the pressure plates (6,7) angularly in opposite directions the engagement of the balls or rollers (10) and the recesses causes the pressure plates to move apart into engagement with the friction discs (11) which are urged into engagement with the braking surfaces (2,5), characterised in that the braking surfaces (2,5) are relatively movable axially, and adjusting means (1,2,3) are provided for adjusting the axial spacing between the braking surfaces (2,5) to compensate for wear of the friction linings (12), adjustment of the axial spacing between the braking surfaces being affected by the movement of a part (3) of the adjusting means in a substantially radial direction.

2. A disc brake according to claim 1, characterised in that the adjusting means is an adjuster unit comprising two adjuster plates (1,2) and means (3) for adjusting the relative positions of the adjuster plates (1,2).

3. A disc brake according to claim 2, characterised in that camming means (20,21) is provided between the adjuster plates and movement of one of the adjuster plates relative to the other adjuster plate substantially in its own plane causes the adjuster plates to separate axially.

4. A disc brake according to claim 3, characterised in that one adjuster plate (1) is provided with a series of angularly spaced protrusions (21) which are received in a complementary series of co-operating recesses (20) provided in the adjacent face of the other adjuster plate (2) which recesses define ramp surfaces, movement of one adjuster plate relative to the other causing the protrusions to ride up the ramp surfaces to cause axial separation of the adjuster plates.

5. A disc brake according to any one of claims 2 to 4, characterised in that the relative movement between the adjuster plates (1,2) comprises bodily movement of one of the adjuster plates (1) substantially in a radial direction.

6. A disc brake according to claim 5, characterised in that the bodily radial movement of the one adjuster plate (1) is guided by guide means (24;20,21).

7. A disc brake according to any preceding claim, characterised in that movement of a single part (3) of the adjusting means (1,2,3) in a radial direction causes the axial adjustment to be made.

8. A disc brake according to claim 5, characterised in that the radial movement of the single part is effected by rotation of a single screw (3).

9. A disc brake according to any preceding claim, characterised in that the adjusting means (1,2,3) is provided interposed between an end wall of the housing (5) and a friction disc (11) so as to provide a braking surface (2) which acts as an axially adjustable end wall in the housing (5).

10. A disc brake according to any one of claims 1 to 8, characterised in that the adjusting means (1,2,3) is interposed between two adjacent friction discs (11) and is keyed to the housing so as to be axially slidable relative to the housing, but angularly immovable relative to the housing (5), thereby providing the effect of a stationary plate (14) of variable axial depth.

11. A disc brake according to any one of claims 1 to 8, characterised in that the adjusting means is associated with one of the pressure plates (6,7) so as to provide the effect of a pressure plate of variable axial depth.

FIG.1.

FIG.2.

FIG.3.

FIG.4.

FIG.5.

FIG.6.

FIG.7.

FIG.8.

FIG.9.

FIG.10.

FIG.11

FIG.12.

FIG.13.

FIG.14.

FIG.15.

FIG.16.

FIG.17.

FIG.18.

| | DOCUMENTS CONSIDERED TO BE RELEVANT | | EP 88308321.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y,A | GB - A - 2 006 358 (BRINKMAN INDUSTRIEVERW.)<br>* Claim 3; fig. 1,2 *<br>-- | 1,2,7,8 | F 16 D 55/14<br><br>F 16 D 65/46 |
| Y | EP - A1 - 0 192 396 (LUCAS INDU-STRIES)<br>* Page 6, lines 26-35 *<br>-- | 1 | |
| Y | EP - A1 - 0 191 626 (LUCAS INDU-STRIES)<br>* Claim 1; fig. 1 *<br>-- | 1 | |
| Y | EP - A1 - 0 040 027 (LUCAS INDU-STRIES)<br>* Claim 8; fig. 1 *<br>-- | 1 | |
| Y,A | SOVIET INVENTIONS ILLUSTRATED, sections P,Q, week D46, December 23, 1981<br>DERWENT PUBLICATIONS LTD., London, Q63<br>* SU-804 940 (STRINADKO V P) *<br>-- | 1,9 | TECHNICAL FIELDS SEARCHED (Int. Cl.4)<br><br>F 16 D 55/00<br><br>F 16 D 65/00 |
| A | DD - A - 111 969 (LÜDERITZ)<br>* Fig. 1 *<br>---- | 1 | |

The present search report has been drawn up for all claims

| Place of search | Date of completion of the search | Examiner |
|---|---|---|
| VIENNA | 22-11-1988 | KAMMERER |